# EUROPEAN PATENT APPLICATION

(11) **EP 2 159 472 A1**
(43) Date of publication of application: **03.03.2010**
(21) Application number: 09167578.5
(22) Date of filing: 10.08.2009
(51) Int. Cl.: F16N 7/38, F03D 11/00

(54) **A fluidic system, a drive train for a wind turbine and a method for actuating a mechanical component**

(30) Priority: 27.08.2008 US 199387
(71) Applicant: General Electric Company, Schenectady, NY 12345 (US)
(72) Inventor: Scholte-Wassink, Hartmut, 49828, Lage (DE)
(74) Representative: Bedford, Grant Richard

(57) **Abstract**

A mechanical component comprising a lubricating system (100, 101) and at least one component (50) comprising a serviced part (5) to be lubricated is provided. The lubricating system (100, 101) comprises a first pump (1) coupled to the mechanical component and a second pump (2). The lubricating system (100, 101) can operate in a first lubricating mode in which the first pump (1) is actuated by the mechanical component and feeds a lubricant to the serviced part (5); and in an actuating mode in which the serviced part (5) is bypassed and in which the second pump (2) actuates the first pump (1), and the first pump (1) actuates the mechanical component. Further, a method for actuating a mechanical component is provided.

## Description

A fluidic system which can operate in a pumping mode and in an actuating mode is disclosed herein. Further, a drive train having a lubricating system, which can operate in a lubricating mode and in an actuating mode, for use in a wind turbine and a method for actuating a mechanical component are disclosed herein.

According to a first aspect of the present invention a fluidic system for a wind turbine which includes a first pump of a first type coupled to a mechanical component and a second pump of a second type in fluid communication with the first pump is provided. According to a first embodiment, the fluidic system is adapted to operate in a pumping mode and in an actuating mode. At least the first pump feeds a fluid through the fluidic system in the pumping mode. In the actuating mode, the second pump feeds the fluid through the fluidic system and the first pump extracts energy from the fluid flow.
Further, a drive train which includes a lubricating system and at least one component with a serviced part to be lubricated is provided. According to another embodiment, the lubricating system is adapted to operate in a first lubricating mode and in an actuating mode. In the first lubricating mode, the mechanical pump is actuated by the drive train and feeds a lubricant to the serviced part. In the actuating mode the serviced part is bypassed and the electric pump actuates the mechanical pump and the mechanical pump actuates the drive train.

Furthermore, a wind turbine which includes a drive train having a lubricating system is provided. The drive train further includes a rotor with at least one rotor blade, a driveshaft, a gearbox having a serviced part, and a generator which includes a generator rotor. The lubricating system includes an electric pump and a mechanical pump which is coupled to the drive train. According to yet another embodiment, the lubricating system is adapted to operate in a first lubricating mode and in an actuating mode. In the first lubricating mode, the mechanical pump is actuated by the drive train and feeds a lubricant to the serviced part of the gearbox. In the actuating mode, the serviced part of the gearbox is bypassed and the electric pump actuates the mechanical pump such that the electric pump rotates the drive train.

Further, a method for actuating a mechanical component having a lubricating system is provided. The lubricating system includes a first pump of a first type coupled to the mechanical component. The lubricating system further includes a second pump of a second type. According to still another embodiment, the method for actuating the mechanical component includes setting up a flow path through the lubricating system and pumping a lubricant through the flow path so that the second pump actuates the first pump and the first pump actuates the mechanical component.

Further embodiments, advantages and features are apparent from the dependent claims, the description and the accompanying drawings.

A full and enabling disclosure of embodiments, including the preferred mode thereof, to one of ordinary skill in the art, is set forth more particularly in the remainder of the specification, including reference to the accompanying figures wherein:
Fig. 1 shows a side view of a wind turbine according to several embodiments.
Fig. 2 shows a scheme of a fluidic system according to further embodiment.
Fig. 3 shows a scheme of a lubricating system according to certain embodiment.
Fig. 4 shows a scheme of a lubricating system in which several embodiments of the present technique are applicable.
Fig. 5 shows a scheme of a lubricating system according to still another embodiment.
Fig. 6 shows a flow diagram of a method for actuating a drive train according to several embodiments.
Fig. 7 shows a flow diagram of a method for actuating a drive train according to another embodiment.
Fig. 8 shows a flow diagram of a method for actuating a drive train according to yet another embodiment.
Fig. 9 shows a flow diagram of a method for actuating a drive train according to still another embodiment.

For clarity reasons, the same elements or manufacturing steps have been designated by the same reference signs in the different drawings and diagrams if not stated otherwise.

Reference will now be made in detail to the various embodiments of the disclosure, one or more examples of which are illustrated in the figures. Each example is provided by way of explanation of the disclosure, and is not meant as a limitation. For example, features illustrated or described as part of one embodiment can be used on or in conjunction with other embodiments to yield yet a further embodiment. It is intended that such modifications and variations are included herewith.

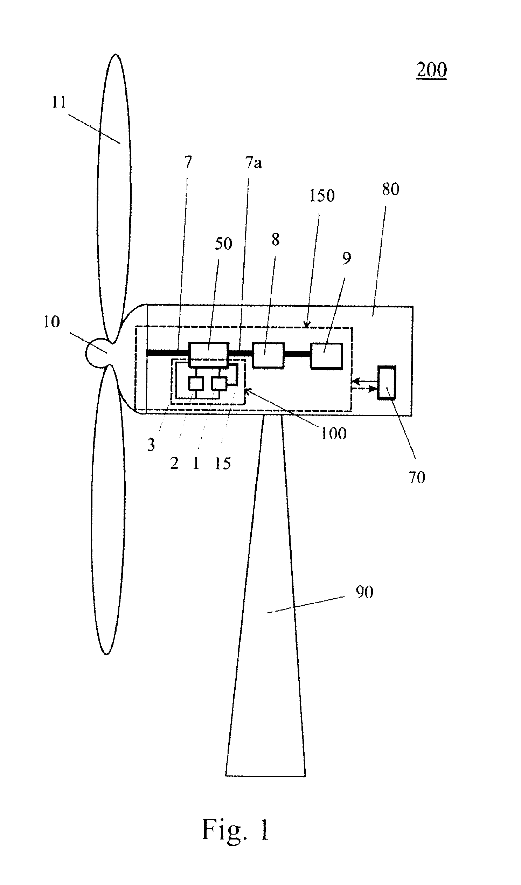

Fig. 1 shows a schematic side view of a horizontal axis wind turbine. The wind turbine 200 includes a tower 90 to which a machine nacelle 80 is mounted at its top end. A rotor or hub 10 bearing one or more rotor blades 11 is mounted to a lateral end of the machine nacelle 80. The rotor blades 11 can typically be adjusted by pitch drives (not shown) which are typically accommodated inside the hub 10. In the context of this application, the term "wind turbine" refers to a machine that converts the kinetic energy of wind into mechanical energy. Typically, the mechanical energy is further converted into electrical energy to be fed into a utility grid. The nacelle 80 typically houses a yaw motor (not shown), a turbine controller 70 and a rotary drive train 150. Usually, the turbine controller 70 operates as a central control system which controls the wind power installation via special hardware components, such as for example a Single-Point-Status (SPS) controller and bus connections such as an Ethernet LAN, a Controller Area Network (CAN) bus or the like. Typically, the turbine controller 70 operates as master controller which supervises the functions of the wind turbine 200. This is indicated by the arrows between the turbine controller and the drive train 150 and may include controlling of other controllers of the wind turbine 200; communication with other wind turbines and/or a wind farm management system as well as error handling and operational optimization. In the context of this application, the term "control" also includes a regulation-type of control, e.g. a feedback-loop regulation.

The drive train 150 of the wind turbine 200 typically includes all components to transmit the mechanical energy of the rotor 10 and to transform the mechanical energy of the rotor 10 into electrical energy including the rotor 10 and a main generator 9 having a generator rotor which is mechanically connected to the rotor 10 during energy conversion. Typically, a synchronous generator or an asynchronous generator is used as main generator 9 to convert the mechanical energy into electrical energy. The rotary drive train assembly 150 shown in Fig. 1 further includes a gearbox 50 for transforming the rotational speed of a driveshaft or low speed shaft 7, which is typically coupled to the rotor 10, to a higher value of a high speed shaft 7a. The high speed shaft 7a is typically connected to rotor of the main generator 9 by means of a separate coupling or clutch (not shown). Further, a break 9 may be used to assist deceleration of the hub 10 during emergency shut downs, e.g. during an outage of the utility grid and to lock the drive train during a calm, a grid outage or maintenance. The term "a calm" as used in this specification intends to describe a condition of calm weather, of low wind or no wind at all. During normal operation of the wind turbine 200, in which the wind turbine 200 feds electrical power into the utility grid, the rotary drive train 150 operates in a normal operation mode too. In normal operation mode, the rotary drive train 150 converts the kinetic energy of the wind into rotary energy, transmits the rotary energy to the main generator 9 and converts, in the main generator 9, the rotary energy into electrical energy. Typically, it is desirable that at least the gearbox 50 is oil lubricated during normal operation of the wind turbine 200 and the rotary drive train 150, respectively. Therefore, the rotary drive train 150 of the wind turbine 200 typically includes a lubricating system 100.

According to an embodiment, the lubricating system 100 can operate in a first lubricating mode and in an actuating mode. A mechanical pump 1 is mechanically coupled to the gearbox 50 via a high speed shaft 15, i.e. the mechanical pump 1 is mechanically coupled to the drive train 150. The term "mechanical pump" as used in this specification intends to describe a pump that is mechanically actuated for pumping. Typically, the mechanical pump 1 is a rotary pump such as a gear pump or a rotary vane pump. In the first lubricating mode, the mechanical pump 1 is actuated by the drive train 150 and feeds a lubricant via a tubing system 3 to a serviced part of the gearbox 50. In other words, in the first lubricating mode, a part of the rotary energy of the drive train 150 is mechanically transferred to the mechanical pump 1 for pumping the lubricant through the serviced part of the gearbox 50. Therefore, the first lubricating mode is typically used during normal operation of the wind turbine 200. In the actuating mode, the serviced part of the gearbox part is typically bypassed and an electric pump 2 exerts a pressure to the mechanical pump 1. In doing so, the mechanical pump 1 is actuated. The term "electric pump" as used in this specification intends to describe a pump that is electrically actuated for pumping. Due to the mechanical coupling of the mechanical pump 1 and the rotary drive train 150, the rotary drive train 150 is also actuated by the mechanical pump 1. Actuating the rotary drive train 150 typically causes rotation of the pivot-mounted parts of the rotary drive train 150 such as the rotor 10, the low speed shaft 7, pivot-mounted inner parts of the gearbox 50, the high speed shaft 7a and the rotor of the main generator 9. Thus, in the actuating mode, electrical energy is typically converted into rotary motion or rotary energy of the drive train 150. In other words, the lubricating system 100 uses the electric pump 1 as an electrically driven hydraulic pump and operates as a hydraulic turn drive of the drive train 150, which rotates the rotary drive train, in the actuating mode. The terms "rotate the drive train" and "rotate the rotary drive train" as used in this specification intends to describe that at least one of the pivot-mounted parts of the drive train which are used for transformation and/or transmission of energy or power are rotated around their respective rotational axis. During normal operation of the wind turbine, all pivot-mounted parts of the drive train which are used for transmission of mechanical energy and transformation of mechanical energy into electrical energy are typically rotated around their respective rotational axis. Likewise, the terms "angle of rotation of the drive train" and "rotational position of the drive train" as used in this specification intends to describe the angle around the respective rotational axis of a pivot-mounted part which is used for transformation and/or transmission of energy or power in the drive train. Further, the term "rotational speed of the drive train" as used in this specification intends to describe an angular velocity of a pivot-mounted part of the drive train around the respective rotational axis. Typically, the main controller 70 can determine the angles of rotation and rotational velocities of different pivot-mounted parts from the respective value of one pivot-mounted part. For example, during normal operation, the ratio between the rotational speed of the rotor 10 and the low speed shaft 7 and the rotational speed of the generator rotor and the high speed shaft 7a is given by the gear ratio.

The actuating mode of the lubricating system 100 may be used during normal operation of the wind turbine 200, e.g. for temporarily support of the drive train 150 during negative gusts. In this event, the lubricating system 100 exerts a torque to the drive train 150 to stabilize the rotational speed of the drive train 150. Further, the actuating mode may be used if the wind turbine 200 does not feed electrical power into the utility grid, e.g. during a calm. During a calm, the actuating mode can be used to slowly rotate the pivot-mounted parts of the drive train 150 of the wind turbine 200 at least temporarily. In doing so, long standstill of the drive train and the formation of standstill damages such as marks caused by the standstill on bearing surfaces between movable parts of the drive train can be avoided. Typically, the rotor 10 bearing heavy rotor blades 11, in particular the bearing of the rotor 10, is more susceptible to standstill damages than other components of the drive train 150. Therefore, it is typically desirable that the rotor 10 is slowly rotated at least from time to time during a calm. On the other hand, actuating the drive train 150 is accompanied by energy consumption. The clutch between the gearbox 50 and the generator rotor may be open during actuating the drive train 150 at least from time to time. In this event, the rotor of the main generator 9 is not actuated in the actuating mode, which saves energy during a calm.

Typically, the mechanical pump 1 is coupled to the gearbox 50 via a further high speed shaft 15. Alternatively and/or in addition, a further gearbox may be used to mechanically couple pump 1 and the driveshaft 7. Compared to direct coupling between the mechanical pump 1 and the driveshaft 7, a stepped up coupling via a gearbox has the advantage that it allows smoother pumping in the first lubricating mode due to shorter pumping cycles. Further, less torque is required in the actuating mode to change motion of the drive train 150 if a gearbox is used.

The electric pump 2 typically operates in parallel to the mechanical pump 1, i.e. both pumps feed the lubricant through the serviced part of the gearbox 50, during the first lubricating mode.

According to still another embodiment, the lubricating system may be operated in a second lubricating mode in which only the electric pump 2 feeds the lubricant through the serviced part. This mode can be used during a calm for lubricating the gearbox 50. For example, the second lubricating mode and the activating mode may be used alternately during a calm. In this way both an insufficient lubrication of the gearbox 50 and marks caused by standstill of the drive train 150 can be avoided.

Alternatively and or in addition, the lubricating system 100 may be used to lubricate a motor, e.g. the yaw drive, the main generator 9, the bearing of the rotor, the clutch, or the driveshaft 7 of the drive train 150.

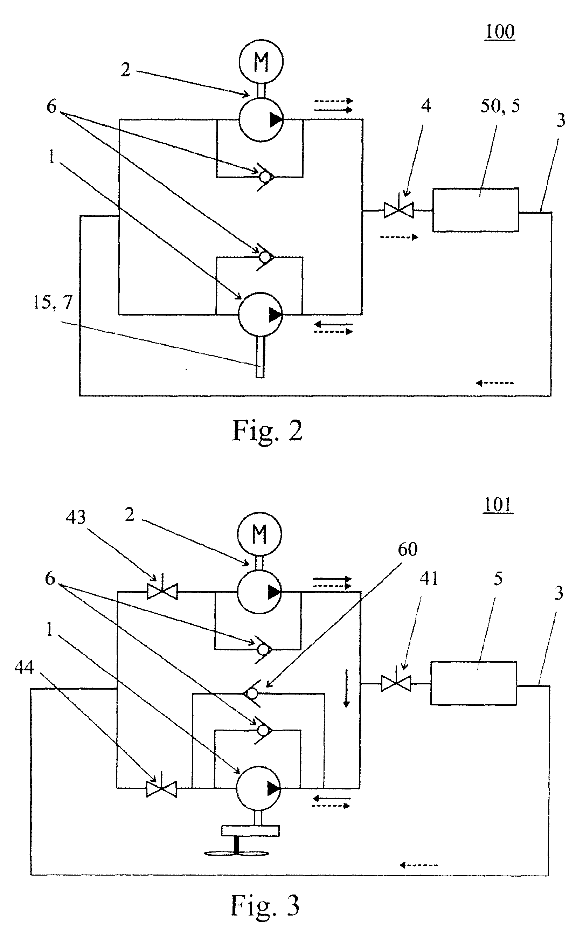

According to still another embodiment, the lubricating system 100 includes a valve (not shown) for switching the lubricating system 100 between the actuating mode and one of the first lubricating mode and the second lubricating mode. This is explained in more detail with respect to Figs. 2 - 4.

The above explained embodiments are independent of the orientation of the nacelle 80 and can, therefore, also be applied to a drive train of a vertical-axis wind turbine.

Fig. 2 illustrates certain embodiments of a fluidic system 100 which can e.g. be used as a lubricating system 100 of a drive train 150 of a wind turbine 200. The fluidic system 100 includes a first pump 1 of a first type and a second pump 2 of a second type. The first pump 1 and the second pump 2 are in fluid communication with each other via a tubing system 3. Further, the first pump 1 is mechanically coupled to a mechanical component. The mechanical component typically includes a mechanical drive mechanism and/or a mechanical mechanism for conversion or transmission of mechanical energy. In certain aspects, the mechanical component is a drive train, e.g. the rotary drive train 150 of a wind turbine 200 as shown in Fig. 1. In the example of Fig. 2, the first pump 1 is typically a mechanical pump which is coupled via a driveshaft 15 to the mechanical component and actuated by the mechanical component for pumping a fluid through the fluidic system 100. Further, the second pump 2 is typically an electric pump or a fuel driven pump. The first pump 1 and the second pump 2 are typically both in fluid communication with a serviced part 5 to be lubricated and the fluid flow to the serviced part 5 can be closed using a valve 4. In some aspects, the serviced part 5 pertains to a component of a drive train such as a gearbox 50.

According to an embodiment, the fluidic system 100 can operate in a pumping mode and in an actuating mode. In the pumping mode, the valve 4 is open and the first pump 1 is actuated by the mechanical component via the driveshaft 15. The first pump 1 and the second pump 2 feed in parallel a fluid through the fluidic system in the pumping mode. The corresponding fluid flow is indicated by dashed arrows in Fig. 2 next to the tubing system 3.

Typically, the fluidic system 100 is a closed fluidic system which is used as a circulatory lubricating system and/or as a circulatory cooling system and/or as a circulatory heating system of a mechanical component such as a drive train in the pumping mode. The fluid is typically a lubricant such as oil or a cooling or heating fluid such as a gas, water or oil. If the fluid is a lubricant the pumping mode is also referred to as lubricating mode or first lubricating mode. In this event the closed fluidic system 100 can e.g. be used as a circulatory lubricating system for a drive train 100 of a wind turbine 200 as explained with reference to Fig. 1.

The fluidic system 100 may, however, also be an open fluidic system. For example, the fluidic inputs of the first pump 1 and the second pump 2 and the fluidic output of the serviced part 5 in the pumping mode may not be connected to each other as shown in Fig. 2 but to a reservoir. An open fluidic system 100 may e.g. be used as a cooling system which pumps a cooling fluid such as air or water to the serviced part 5 in the pumping mode.

In the actuating mode, the valve 4 is closed and the second pump 2 exerts a pressure to the first pump 1 and feeds the fluid through the fluidic system 100. The corresponding fluid flow is indicated by full arrows in Fig. 2. If the second pump 2 can pump in both directions, the flow direction may also be reversed. In the actuating mode, the first pump 1 extracts energy from the fluid flow of the fluidic system 100. Thus, the power flow between the first pump 1 and the mechanical component, which is typically coupled to the first pump 1 by the driveshaft 15, is reversed in the actuating mode. Accordingly, the actuating mode can be used to actuate the mechanical component. In other words, the fluidic system 100 is actuated by the mechanical component via the driveshaft 15 in the pumping mode, and the fluidic system 100 actuates the mechanical component via the driveshaft 15 in the actuating mode. In some aspects, the first pump 1 operates as a turbine which rotates the driveshaft 15 in the actuating mode.

As can be further appreciated from Fig. 2, the serviced part 5 is typically bypassed in the actuating due to the closed valve 4. Bypassing the serviced part 5 reduces the hydrodynamic friction of the fluidic system 100. Typically, this reduces the power consumption of the fluidic system 100 and the required rated power of the second pump 2.

For safety reasons, the fluidic system 100 of Fig. 2 further includes two over pressure valves 6 for protecting the first pump 1 and the second pump 2 during the pumping mode.

With respect to Fig. 3 several embodiments pertaining to a drive train having a lubricating system 101 are explained. The drive train includes a component such as a gearbox, which has a serviced part 5 to be lubricated. The lubricating system 101 includes a tubing system 3, three valves 41, 43 and 44, an electric pump 2 and a mechanical pump 1 which is mechanically coupled to the drive train, e.g. to the gearbox.

According to an embodiment, the lubricating system can operate in a first lubricating mode and in an actuating mode. In the first lubricating mode the valves 41 and 44 are open and the mechanical pump 1 is actuated by the drive train. Thus, the mechanical pump feeds a lubricant to the serviced part 5. The valve 43 is open if the electric pump 2 feeds the lubricant in parallel to the mechanical pump 1 to the serviced part 5 in the first lubricating mode. If the electric pump 2 is not operating in this mode, the valve 43 is typically closed. In the actuating mode, in which the valve 43 is open, the serviced part is bypassed by the closed valve 41 and the electric pump 2 actuates the mechanical pump 1. The fluid flow in the lubricating system 101 with open valve 43 in the first lubricating mode and the actuating mode are symbolized by dashed and full arrows, respectively. Due to the mechanical coupling between the mechanical pump 1 and the drive train, the mechanical pump 1 actuates the drive train in the actuating mode. In other words, the drive train actuates the lubricating system 101 in the first lubricating mode, and the lubricating system 101 actuates the drive train in the actuating mode.

For switching between the actuating mode and the first lubricating mode valve 41 has to be switched. If valve 43 is closed during the first lubricating mode it has to be opened for switching to the actuating mode too.

According to a further embodiment, the lubricating system 101 can operate in a second lubricating mode in which only the electric pump 2 feeds the lubricant to the serviced part 5. In this mode, the valves 41 and 43 are opened and valve 44 is typically closed. In this event, the valves 41 and 43 have to be switched to change to the activating mode of the lubricating system 101.

As in Fig. 2, the mechanical pump 1 and the electric pump 2 of Fig. 3 are protected against over pressure during the first lubricating mode and second lubricating mode by respective over pressure valves 6. According to another embodiment, the lubricating system 101 further includes an overpressure valve 60 to protect the mechanic pump 1 against overloading when the lubricating system is operating in the actuating mode.

Typically, the switching between the first lubricating mode, the second lubricating mode and the actuating mode is controlled by a controller which supervises the functions of the drive train and of the lubricating system 101. For example, the lubricating system 101 of Fig. 3 may be used as the lubricating system 100 of the wind turbine 200 of Fig. 1. In this event, the mechanical pump 1 is typically coupled to the gearbox 50 of the wind turbine 200 and feeds the lubricant to the serviced part 5 of the gearbox 50. Depending on the state of the wind turbine 200, the turbine controller 70 typically issues commands to cause switching between the modes of the lubricating system 100. For example, if the wind turbine 200 is in a state of normal operation, in which the wind turbine 200 feds electrical power into the utility grid, the lubricating system 100 is typically in one of the first and second lubricating modes. After detecting a too low wind power, e.g. a too low rotor speed or too low wind speed during a calm, the turbine controller 70 will typically switch the lubricating system 100 into the actuating mode at least from time to time. The turbine controller 70 may also switch off the lubricating system from time to time to minimize energy consumption.

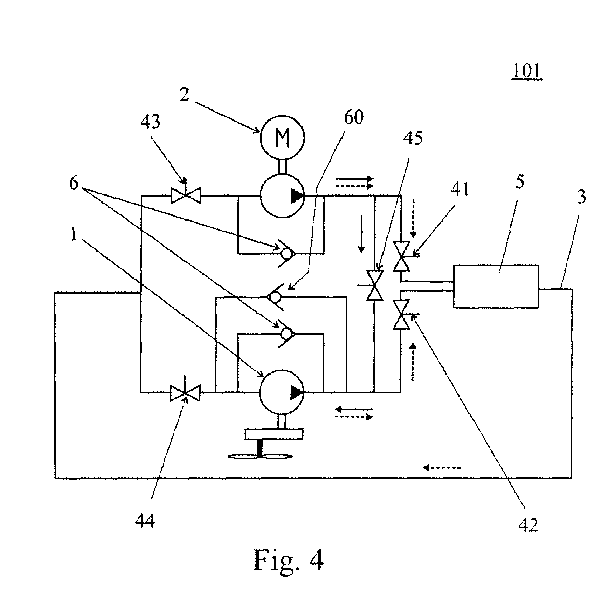

With respect to Fig. 4 a further aspect will be explained. The lubricating system 101 shown in Fig. 4 is similar to the lubricating system of Fig. 3. The lubricating system 101 of Fig. 4 can also operate in a lubricating mode in which an electric pump 2 and a mechanical pump 1, which is actuated by the drive train, feed in parallel a lubricant to a serviced part 5. In an actuating mode of the lubricating system 101, the serviced part is bypassed and the electric pump 2 actuates the mechanical pump 2 which operates as a turbine. The serviced part 5 of Fig. 4 has, however, to fluid inputs. Consequently, two additional valves 42 and 45 are typically used to switch between the lubricating mode and the actuating mode. In the lubricating mode, all valves except for valve 45 are open. The valves 41, 42 and 45 are switched to change to the actuating mode. Instead of the separated valves 41, 42 and 45 shown in Fig. 4, a switchable distribution block with 4 fluid ports may be used for switching between the two modes.

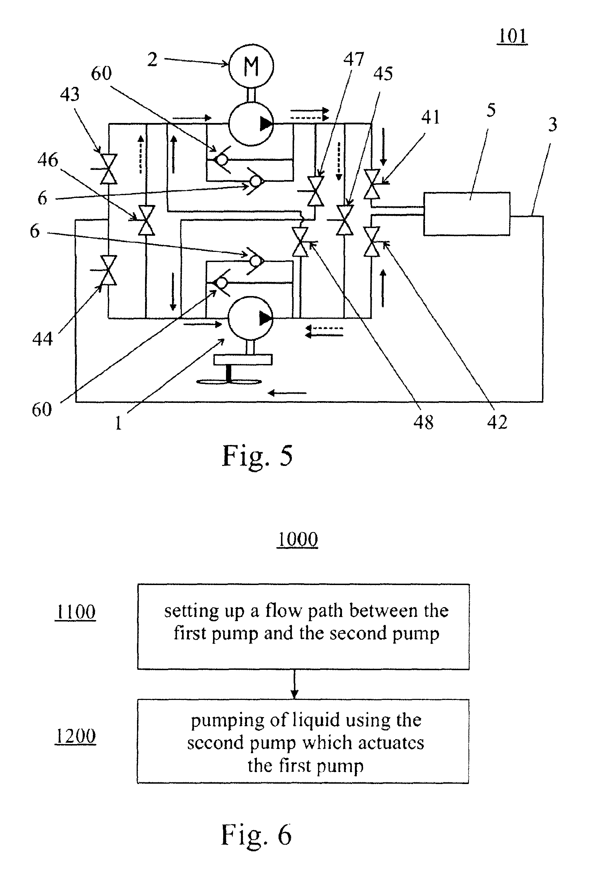

With respect to Fig. 5 yet a further aspect will be explained. The lubricating system 101 shown in Fig. 5 is similar to the lubricating system of Fig. 4. The lubricating system 101 of Fig. 5 can also operate in a lubricating mode and in an actuating mode. In the lubricating mode, a mechanical pump 1 actuated by a drive train and an electric pump 2 feed in parallel a lubricant to a serviced part 5 of the drive train. In this mode the valves 41, 42, 43 and 44 are open and the valves 45, 46, 47 and 48 are closed. In an actuating mode, the serviced part 5 is bypassed and the electric pump 2 actuates the mechanical pump 1. In this mode the mechanical pump 1 operates as a turbine which rotates at least one pivot-mounted part of the mechanically coupled drive train. The direction of flow can be selected in the actuating mode even if the electric pump 1 can only pump in one direction. In doing so, the direction of rotation of the drive train can be chosen and changed, respectively. In the actuating mode, the valves 41, 42, 43 and 44 are closed. If the valves 45 and 46 are open and the valves 47 and 48 are closed in this mode, the fluid flow through the lubricating system 101 follows the dashed arrows. The fluid flow is reversed in the actuating mode if the valves 45 and 46 are closed and the valves 47 and 48 are open.

With respect to Fig. 6 several embodiments will be explained for actuating a mechanical component by a fluidic system 100 as shown in Fig. 2. Accordingly, the fluidic system 100 includes a second pump 2 in fluid communication with a first pump 1 which is coupled to the mechanical component via a driveshaft 15. The method 1000 for actuating the mechanical component includes a first step 1100 of setting up a flow path through the fluidic system 100 and a second step 1200 of pumping a liquid through the flow path so that the second pump 2 actuates the first pump 1. Due to the mechanical coupling between the driveshaft 15 and the first pump 1, the first pump 1, which is actuated by the second pump 2, actuates the mechanical component via the driveshaft 15 during the second step 1200. Typically, the first pump 1 is a mechanical pump and the second pump 2 is an electric pump. In this event, the electric pump 2 operates as an electrically driven hydraulic pump and the mechanical pump 1 converts the fluid motion into a movement of the driveshaft 15 in the actuating mode. The second pump 2 may, however, also be a fuel driven pump. If the driveshaft 15 is connected to or part of a rotary drive train 150, the first pump 1 operates as a turbine, which rotates the drive train 150 during the second step 1200.

The method 1000 can be used to actuate a mechanical component by an open fluidic system or by a closed fluidic system. Typically, a closed fluidic system 100 as shown in Fig. 2 is used. In one example, the closed fluidic system 100 can also be used as a cooling system which pumps a cooling fluid to a serviced part of the mechanical component in a pumping mode, in which the first pump 1 is actuated by the mechanical component. In another example, the closed fluidic system 100 can also be used as a lubricating system which pumps a lubricant to a serviced part of the mechanical component in the pumping mode. In yet another example, the closed fluidic system 100 can also be used as a heating system which pumps a heating fluid to a serviced part of the mechanical component in the pumping mode.

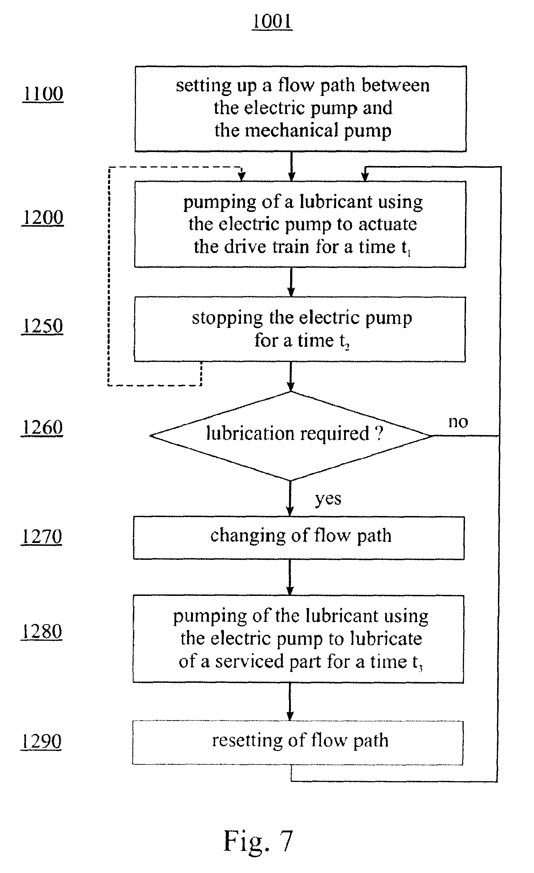

With respect to Fig. 7 several embodiments will be explained for actuating a mechanical component, e.g. a drive train, by a fluidic system such as a lubricating system. For sake of simplicity, the following aspects are explained only with respect to lubricating systems 101 as shown in Figs. 3 to 5. Typically, they also apply to the drive train 150 and the lubricating system 100 of the wind turbine 200 of Fig. 1.

Furthermore, the following aspects typically also apply to a fluidic system 100 coupled to a mechanical component as explained with respect to Fig. 2.

According to an embodiment, the method 1001 for actuating the drive train 150 includes a first step 1001 of setting up a flow path through the lubricating system 101 and a second step 1200, in which the electric pump 2 actuates the mechanical pump 1 for a first time t₁ by exerting a pressure to the mechanical pump 1 and pumping a lubricant through the flow path. The mechanical pump 1, which is actuated by the electric pump 2 and mechanically coupled to the drive train 150, exerts an actuating torque on the drive train 150 for the first time t₁. If the mechanical pump 1 is coupled to a rotary drive train 150, the mechanical pump 1 typically rotates the mechanically coupled pivot-mounted parts of the drive train 150 in the actuating mode. During normal operation of the drive train, the power flow may be reversed such that the drive train 150 actuates the lubricating system 101 in a first lubricating mode. If the moving power, which actuates the drive train 150 during normal operation, fails, the lubricating system can be used to slowly actuate the drive train 150. In doing so, long standstill of the drive train 150 and the formation of marks caused by standstill can be avoided. This is particularly useful for the drive train 150 of a wind turbine 200 during a calm.

Typically, the step 1100 includes switching of an appropriate number of valves. For example, at least the valve 41 of the lubricating system 101 shown in Fig. 3 has to be switched for setting up the flow path between the electric pump 2 and the mechanical pump 1.

The first time t₁ may be as long as the duration of failing moving power. However, actuating the drive train requires energy and it is typically desirable to reduce the energy consumption during the failing of moving power.

According to another embodiment, the method 1001 includes a subsequent step 1250 of stopping the electric pump 2 for a second time t₂ to reduce energy consumption. Typically, the step 1100 followed by repeated loops of the steps 1200 and 1250 as indicated by the dashed arrow can also be used as a separate method to avoid standstill damages of the drive train 100 during a absence of moving power of the drive train.

If lubrication of serviced parts is desirable in addition, step 1250 is typically followed by a step 1260 of determining if lubrication has to be issued at given time. This may e.g. be the case if a certain time interval has passed. Depending on step 1260, the method 1001 is continued either with a next cycle starting with step 1200 or with the steps 1270, 1280 and 1290 to lubricate the serviced parts prior to returning to step 1200. In step 1270 the flow path of the lubricating system 100 is changed such that the electric pump 2 can pump the lubricant to the serviced parts in step 1280. Typically, at least one valve is switched in step 1270 to change the flow path. After pumping the lubricant to the serviced parts for a third time t₃, the flow path is reset in step 1290 to the state of step 1200. Typically, this is done by switching the same valves that were switched in step 1270.

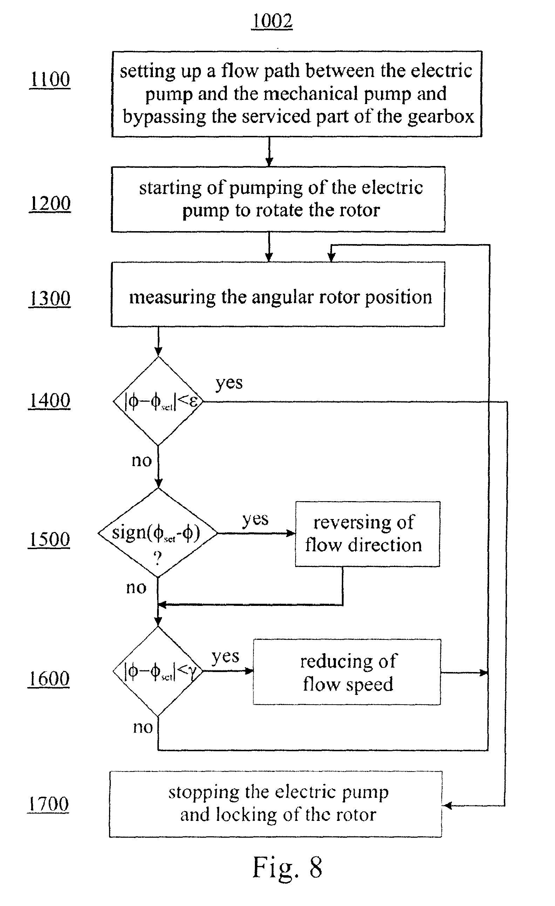

With respect to Fig. 8 several embodiments will be explained for rotating the rotor 10 and/or the rotor of the main generator 9 of a wind turbine 200 as shown in Fig. 1 into a predefined rotational position. The drive train 150 of the wind turbine 200 includes a gearbox 50 and a lubricating system 100 with a mechanical pump 1 in fluid connection with the serviced part of the gearbox 50 and an electric pump 2. Further, the mechanical pump 1 is mechanically coupled to the gearbox 50.

According to an embodiment, the method 1002 for actuating the drive train 150 includes a step 1100 of setting up a flow path through the lubricating system 100 such that the serviced part of the gearbox 50 is bypassed and that in a second step 1200 the electric pump 2 can start feeding a lubricant through the flow path which actuates the mechanical pump 1. Typically, step 1100 includes switching of at least one valve. Actuating the mechanical pump 1 in step 1200 causes rotation of the rotor 10 and of the generator rotor if the clutch is closed. Again, the steps 1100 and 1200 of the method 1002 can be used as a separate method to avoid long standstill of the drive train 100 during a calm.

According to another embodiment, the method 1002 includes a further step 1300 in which the angular position Φ of the rotor 10 is measured using a positioning monitoring system for comparison with a predefined position Φₛₑₜ. The predefined position Φₛₑₜ may for example correspond to a suitable rotational position of the rotor 10 which allows access to the rotor or hub 10 of the wind turbine 200, e.g. for service and maintenance during a calm. In a subsequent step 1400, the absolute difference |dΦ| between the measured angular position Φ and the predefined position Φₛₑₜ is determined. If the absolute difference |dΦ| is smaller than a threshold ε, the electric pump 1 is typically stopped and the rotor 10 is locked in the predefined position Φₛₑₜ using e.g. an automatic rotor locking system in a step 1700. Locking the rotor 10 typically includes applying the brake 8 and inserting a locking pinion. If the absolute difference |dΦ| is larger than or equal to the threshold ε, the sign of the difference between the measured angular position Φ and the predefined position Φₛₑₜ is typically determined in a step 1500. Depending on the sign of the difference and on the absolute difference between the measured angular position Φ and the predefined position Φₛₑₜ, the flow direction may be reversed. Reversing of flow direction is typically achieved by changing the pumping direction of the electric pump 2 or by reconfiguring the flow path as explained with reference to Fig. 5. Further, the step 1500 may already be carried out between the steps 1100 and 1200 of the method 1002 to reduce the time and energy consumption. Furthermore, reversing of flow direction, which is typically accompanied by reversing direction of rotation of the rotor 10, may be omitted if the flow speed is above a certain threshold. This avoids changing of the rotational direction of the rotor 10 above a respective rotational speed limit of the rotor 10. After step 1500, the flow speed is typically reduced in step 1600, if the absolute difference |dΦ| is smaller than a second threshold γ. In doing so, the predefined position Φₛₑₜ is reached at a reduced rotational speed of the rotor 10. This result in a lower torque that has to be applied to decelerate or break the rotor 10. Typically, the flow speed is reduced by reducing the pumping speed of the electric pump 2. In some aspects, the electric pump 2 is switched off and the rotor 10 slows down naturally, i.e. due to friction. After a certain time delay of pumping, step 1600 is followed by step 1300, which starts a further cycle of the method 1002. The order of steps 1500 and 1600 may also be reversed.

The method 1002 is typically used during a calm to lock the rotor 10 in a suitable rotational position which allows access to the rotor or hub 10 of the wind turbine 200. Access to the hub 10, e.g. for service and maintenance or fault finding and repair, can be gained during a calm without manual turning activities and/or usage of special tools for rotating the rotor 10.

For sake of simplicity, the steps 1300 to 1700 of the method 1002 have only been explained with respect to the rotor 10 of the wind turbine 200. They can, however, also be used to rotate and lock the rotor of the main generator 9 into defined positions. Typically, the locking of the rotor of the main generator 9 in step 1700 includes only applying the break 8. Rotating the rotor of the main generator 9 into predefined positions can be used for service and maintenance during a calm. Further, defined rotating of the generator rotor into predefined positions by using the lubricating system 100 as actuator can also be used for generator alignment processes during installation of the wind turbine 200. Again, manual turning activities and/or the usage of special tools can be avoided.

Typically, the methods 1000, 1001 and 1002 are issued and/or supervised by a controller such as the turbine controller 70 of the wind turbine 200. During a calm, the turbine controller 70 typically performs automatically closed-loop controls such as the method 1001 to avoid the formation of standstill damages. Further, the turbine controller 70 may lock the rotor 10 in a predefined angle of rotation on external request to allow access to the hub 10.

Typically, a computer program runs on the turbine controller 70 of the wind turbine 200 for performing and/or controlling the methods 1000, 1001 and 1002. The program typically includes computer code for transmitting and receiving data, and issuing commands to the hardware of the drive train 150 and the lubricating system 101. The computer program further includes computer code for setting up a flow path through the lubricating system 101 and for pumping a lubricant through the flow path so that the electric pump 2 actuates the mechanical pump 1 and the mechanical pump 1 actuates the drive train 150 in the actuating mode.

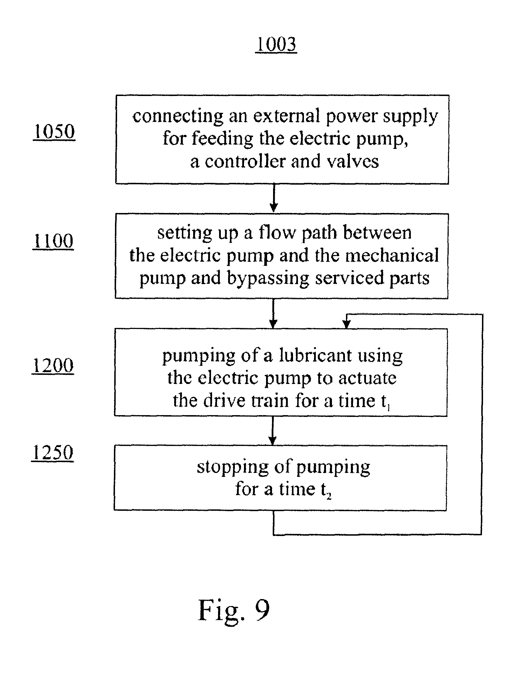

With respect to Fig. 9 still another embodiment for actuating the drive train 150 of a wind turbine 200 as shown in Fig. 1 will be explained. The method 1003 includes the same steps 1100, 1200 and 1250 as the method 1001 of Fig. 7. Further, the steps 1100, 1200 and 1250 are carried out in the same order and the steps 1200 and 1250 are repeated in a loop in both methods 1001 and 1003. In addition, the method 1003 includes a step 1050 of connecting an external power supply, such as a diesel generator, to supply at least a controller, the electric pump 1 and the valves of the lubricating system 101. The controller typically controls the electric pump 1 and the valves of the lubricating system 101 and performs the method steps 1100, 1200 and 1250. Thereby, the drive train 150 of the wind turbine 200 can be actuated during a calm and an outage of the external grid, such that standstill damages can be avoided. Furthermore, the method 1003 enable actuating of the drive train 150 of the wind turbine 200 to avoid standstill damages prior to assembly of the wind turbine 200, e.g. during a train transport of drive trains 150 from the manufacturer to a wind farm. Typically, one diesel generator is sufficient to supply electrical power for several drive trains 150. For transport purpose, the step of 1100 may also be carried out manually.

This written description uses examples to disclose embodiments, including the preferred mode, and also to enable any person skilled in the art to make and use such embodiments. While various specific embodiments have been described, those skilled in the art will recognize other embodiments can be practiced with modification within the spirit and scope of the claims. Especially, mutually non-exclusive features of the embodiments described above may be combined with each other. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are now defined below by the following numbered clauses:
1. A mechanical component comprising a lubricating system (100, 101) and at least one component (50) comprising a serviced part (5) to be lubricated, the lubricating system (100, 101) comprising:
   - a first pump (1) of a first type coupled to the mechanical component; and
   - a second pump (2) of a second type;
   wherein the lubricating system (100, 101) is adapted to operate in a first lubricating mode in which the first pump (1) is actuated by the mechanical component and feeds a lubricant to the serviced part (5); and
   wherein the lubricating system (100, 101) is further adapted to operate in an actuating mode in which the serviced part (5) is bypassed and in which the second pump (2) actuates the first pump (1), wherein the first pump (1) actuates the mechanical component.
2. The mechanical component according to clause 1, wherein the first pump is a mechanical pump.
3. The mechanical component according to clause 1 or 2, wherein the second pump is an electric pump.
4. The mechanical component according to any of the preceding clauses, wherein, in the first lubricating mode, the second pump (2) feeds the lubricant to the serviced part (5) in parallel to the first pump (1).
5. The mechanical component according to any of the preceding clauses, wherein the lubricating system (100, 101) is further adapted to operate in a second lubricating mode in which only the second pump (2) feeds the lubricant to the serviced part (5).
6. The mechanical component according to any of the preceding clauses, wherein the lubricating system further comprises at least one valve for switching the lubricating system between the actuating mode and one of the first lubricating mode and the second lubricating mode.
7. The mechanical component according to any of the preceding clauses, wherein, the at least one component comprising a serviced part (5) to be lubricated is selected from a group consisting of a gearbox (50), a motor, a generator (9), a clutch, a bearing and a shaft (7, 7a).
8. The mechanical component according to any of the preceding clauses, wherein the mechanical component is a rotary drive train (150) comprising a driveshaft (7) coupled to a rotor (10) and/or a generator (9) and/or a motor and/or a gearbox (50) and
   wherein, in the actuating mode, the first pump (1) rotates the rotary drive train (150).
9. The mechanical component according to any preceding clause, further comprising a positioning monitoring system for monitoring an angle of rotation of the rotary drive train (150).
10. The mechanical component according to any preceding clause, wherein the rotary drive train (150) comprises a rotor (10) comprising at least one rotor blade (11), a driveshaft (7) and a gearbox (50) comprising a serviced part (5) to be lubricated in fluid communication with the lubricating system (100, 101); and wherein the rotary drive train (150) is adapted to operate in a wind turbine (200) comprising a main controller (70) for supervising the rotary drive train (150).
11. A method for actuating a mechanical component, the mechanical component comprising a lubricating system (100, 101) comprising a first pump (1) of a first type and a second pump (2) of a second type, the first pump (1) being coupled to the mechanical component, comprising:
   - setting up a flow path through the lubricating system (100, 101); and
   - pumping a lubricant through the flow path;
      so that the second pump (2) actuates the first pump (1) and the first pump (1) actuates the mechanical component.
12. The method according to clause 11, wherein the first pump is a mechanical pump and the second pump is an electric pump, further comprising:
   - connecting an external power supply to the lubricating system to feed the electric pump.
13. The method according to clause 11 or 12, wherein the mechanical component further comprises at least one component comprising a serviced part (5) to be lubricated, wherein the step of setting up a flow path through the lubricating system (100, 101) comprises bypassing the serviced part (5).
14. The method according to any of the clauses 11 to 13, wherein the lubricating system (100, 101) further comprises at least one valve (6), wherein the step of setting up a flow path through the lubricating system (100, 101) comprises switching of the at least one valve (6).
15. The method according to according to any of the clauses 11 to 14, wherein the mechanical component is a rotary drive train (150) further comprising a positioning monitoring system for monitoring an angle of rotation of the rotary drive train (150), further comprising:
   - measuring the angle of rotation of the rotary drive train (150); and/or rotating the rotary drive train (150) into a predefined angle of rotation.
16. A fluidic system for a wind turbine comprising:
   - a first pump of a first type coupled to a mechanical component; and
   - a second pump of a second type in fluid communication with the first pump;
      the fluidic system being adapted to operate in a pumping mode in which at least the first pump feeds a fluid through the fluidic system; and
      the fluidic system being further adapted to operate in an actuating mode in which the second pump feeds the fluid through the fluidic system and the first pump extracts energy from the fluid flow.
17. The fluidic system according to clause 16, wherein the first pump is a mechanical pump.
18. The fluidic system according to clause 16 or 17, wherein the second pump is an electric pump.
19. The fluidic system according to any of clauses 16 to 18, further comprising at least one valve for switching the fluidic system between the actuating mode and the pumping mode.
20. A drive train comprising a lubricating system and at least one component comprising a serviced part to be lubricated, the lubricating system comprising:
   - a mechanical pump coupled to the drive train; and
   - an electric pump;
      the lubricating system being adapted to operate in a first lubricating mode in which the mechanical pump is actuated by the drive train and feeds a lubricant to the serviced part; and
      the lubricating system being further adapted to operate in an actuating mode in which the serviced part is bypassed and in which the electric pump actuates the mechanical pump and the mechanical pump actuates the drive train.
21. The drive train according to clause 20, wherein, in the first lubricating mode, the electric pump feeds the lubricant to the serviced part in parallel to the mechanical pump.
22. The drive train according to clauses 20 or 21, wherein the lubricating system is further adapted to operate in a second lubricating mode in which only the electric pump feeds the lubricant to the serviced part.
23. The drive train according to any of clauses 20 to 22, wherein the lubricating system further comprises at least one valve for switching the lubricating system between the actuating mode and one of the first lubricating mode and the second lubricating mode.
24. The drive train according to any of clauses 20 to 23, wherein, the at least one component comprising a serviced part to be lubricated is selected from a group consisting of a gear box, a motor, a generator, a clutch, a bearing and a shaft.
25. The drive train according to any of clauses 20 to 24, wherein the lubricating system is a circulatory lubrication system.
26. The drive train according to any of clauses 20 to 25, wherein the drive train is a rotary drive train comprising a driveshaft coupled to at least one component selected from a group consisting of a rotor, a generator, a motor and a gearbox, and wherein, in the actuating mode, the mechanical pump rotates the rotary drive train.
27. The drive train according to any of clauses 20 to 26, further comprising a positioning monitoring system for monitoring an angle of rotation of the rotary drive train.
28. The drive train according to any of clauses 20 to 27, wherein the lubricating system further comprises an overpressure valve to protect the mechanical pump against overloading when the lubricating system is operating in the actuating mode.
29. A wind turbine comprising a drive train comprising a lubricating system, a rotor comprising at least one rotor blade, a driveshaft, a gearbox comprising a serviced part to be lubricated, and a generator comprising a generator rotor, the lubricating system comprising:
   - a mechanical pump coupled to the drive train; and
   - an electric pump;
      the lubricating system being adapted to operate in a first lubricating mode in which the mechanical pump is actuated by the drive train and feeds a lubricant to the serviced part of the gearbox; and
      the lubricating system being further adapted to operate in an actuating mode in which the serviced part of the gearbox is bypassed and in which the electric pump actuates the mechanical pump and the mechanical pump rotates the drive train.
30. The wind turbine according to clause 29, wherein the drive train further comprising a positioning monitoring system for monitoring an angle of rotation of the drive train.
31. The wind turbine according to clause 29 or 30, further comprising a controller adapted to automatically rotate the drive train into a predefined angle of rotation using the positioning monitoring system for measuring the angle of rotation of the drive train and the lubricating mode of the lubricating system for rotating the drive train.
32. The wind turbine according to any of clauses 29 to 31, wherein the drive train further comprises a break and wherein the controller is adapted to automatically lock the drive train in a predefined angle of rotation.
33. A method for actuating a mechanical component, the mechanical component comprising a lubricating system comprising a first pump of a first type and a second pump of a second type, the first pump being coupled to the mechanical component, comprising:
   - setting up a flow path through the lubricating system; and
   - pumping a lubricant through the flow path so that the second pump actuates the first pump and the first pump actuates the mechanical component.
34. The method according to clause 33, wherein the mechanical component further comprises at least one component comprising a serviced part to be lubricated, wherein the step of setting up a flow path through the lubricating system comprises bypassing the serviced part.
35. The method according to clause 33 or 34, wherein the lubricating system further comprises at least one valve, wherein the step of setting up a flow path through the lubricating system comprises switching of the at least one valve.
36. The method according to any of clauses 33 to 35, wherein the first pump is a mechanical pump and the second pump is an electric pump, further comprising:
   - connecting an external power supply to the lubricating system to feed the electric pump.
37. The method according to any of clauses 33 to 36, wherein the mechanical component is a rotary drive train comprising a driveshaft coupled to at least one component selected from a group consisting of a rotor, a generator, a motor, and a gear box, wherein the step of pumping a lubricant through the flow path causes rotation of the rotary drive train, further comprising at least one of:
   - reversing flow direction to change rotation direction of the rotary drive train; and
   - changing flow speed to change rotational speed of the rotary drive train.
38. The method according to any of clauses 33 to 37, wherein the rotary drive train further comprises a positioning monitoring system for monitoring an angle of rotation of the rotary drive train, further comprising:
   - measuring the angle of rotation of the rotary drive train.
39. The method according to any of clauses 33 to 38, further comprising:
   - rotating the rotary drive train into a predefined angle of rotation.
40. The method according to any of clauses 33 to 39, wherein the rotary drive train further comprises a break and a locking assembly comprising a locking pinion, further comprising:
   - locking the rotary drive train in the predefined angle of rotation.

## Claims

1. A mechanical component comprising a lubricating system (100, 101) and at least one component (50) comprising a serviced part (5) to be lubricated, the lubricating system (100, 101) comprising:
- a first pump (1) of a first type coupled to the mechanical component; and
- a second pump (2) of a second type;
wherein the lubricating system (100, 101) is adapted to operate in a first lubricating mode in which the first pump (1) is actuated by the mechanical component and feeds a lubricant to the serviced part (5); and
wherein the lubricating system (100, 101) is further adapted to operate in an actuating mode in which the serviced part (5) is bypassed and in which the second pump (2) actuates the first pump (1), wherein the first pump (1) actuates the mechanical component.

2. The mechanical component according to claim 1, wherein the first pump (1) is a mechanical pump.

3. The mechanical component according to claim 1 or 2, wherein the second pump (2) is an electric pump.

4. The mechanical component according to any of the preceding claims, wherein, in the first lubricating mode, the second pump (2) feeds the lubricant to the serviced part (5) in parallel to the first pump (1).

5. The mechanical component according to any of the preceding claims, wherein the lubricating system (100, 101) is further adapted to operate in a second lubricating mode in which only the second pump (2) feeds the lubricant to the serviced part (5).

6. The mechanical component according to any of the preceding claims,
wherein the lubricating system (100, 101) further comprises at least one valve for switching the lubricating system between the actuating mode and one of the first lubricating mode and the second lubricating mode.

7. The mechanical component according to any of the preceding claims, wherein, the at least one component comprising a serviced part (5) to be lubricated is selected from a group consisting of a gearbox (50), a motor, a generator (9), a clutch, a bearing and a shaft (7, 7a).

8. The mechanical component according to any of the preceding claims, wherein the mechanical component is a rotary drive train (150) comprising a driveshaft (7) coupled to a rotor (10) and/or a generator (9) and/or a motor and/or a gearbox (50) and
wherein, in the actuating mode, the first pump (1) rotates the rotary drive train (150).

9. The mechanical component according to claim 8, further comprising a positioning monitoring system for monitoring an angle of rotation of the rotary drive train (150).

10. The mechanical component according to the claims 8 or 9, wherein the rotary drive train (150) comprises a rotor (10) comprising at least one rotor blade (11), a driveshaft (7) and a gearbox (50) comprising a serviced part (5) to be lubricated in fluid communication with the lubricating system (100, 101); and wherein the rotary drive train (150) is adapted to operate in a wind turbine (200) comprising a main controller (70) for supervising the rotary drive train (150).

11. A method for actuating a mechanical component, the mechanical component comprising a lubricating system (100, 101) comprising a first pump (1) of a first type and a second pump (2) of a second type, the first pump (1) being coupled to the mechanical component, comprising:
- setting up a flow path through the lubricating system (100, 101);
- pumping a lubricant through the flow path; so that the second pump (2) actuates the first pump (1) and the first pump (1) actuates the mechanical component.

12. The method according to claim 11, wherein the first pump (1) is a mechanical pump and the second pump (2) is an electric pump, further comprising:
- connecting an external power supply to the lubricating system (100,101) to feed the electric pump.

13. The method according to claim 11 or 12, wherein the mechanical component further comprises at least one component comprising a serviced part (5) to be lubricated, wherein the step of setting up a flow path through the lubricating system (100, 101) comprises bypassing the serviced part (5).

14. The method according to any of the claims 11 to 13, wherein the lubricating system (100, 101) further comprises at least one valve (6), wherein the step of setting up a flow path through the lubricating system (100, 101) comprises switching of the at least one valve (6).

15. The method according to according to any of the claims 11 to 14, wherein the mechanical component is a rotary drive train (150) further comprising a positioning monitoring system for monitoring an angle of rotation of the rotary drive train (150), further comprising:
- measuring the angle of rotation of the rotary drive train (150); and/or
- rotating the rotary drive train (150) into a predefined angle of rotation.
